(19) Europäisches Patentamt

European Patent Office

Office européen des brevets

(11) **EP 1 640 728 A1**

(12) **EUROPEAN PATENT APPLICATION**

(43) Date of publication:
29.03.2006 Bulletin 2006/13

(51) Int Cl.:
*G01P 21/00* (2006.01)    *G01P 15/18* (2006.01)
*G01P 15/11* (2006.01)    *G01P 15/105* (2006.01)
*G06F 3/033* (2006.01)

(21) Application number: 05255835.0

(22) Date of filing: 21.09.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 23.09.2004 US 612227 P
29.09.2004 US 613723 P
04.11.2004 US 980791 P
19.11.2004 US 992289 P

(71) Applicant: **Innalabs Technologies, Inc.**
**Dulles, VA 20166 (US)**

(72) Inventors:
- **Somenenko, Dmitri V.**
**Suite 260,**
**Dulles 20166 VA (US)**
- **Suprun, Anton E.**
**Suite 260,**
**Dulles 20166 VA (US)**
- **Romanov, Yuri I.**
**Suite 260,**
**Dulles 20166 VA (US)**

(74) Representative: **Garratt, Peter Douglas et al**
**Mathys & Squire**
**120 Holborn**
**London EC1N 2SQ (GB)**

(54) **Calibration of an Accelerometer**

(57) A method of calibrating an acceleration sensor includes suspending an inertial body using a magnetic fluid; generating a magnetic field within the magnetic fluid; modulating the magnetic field to cause a displacement of the inertial body; measuring a response of the inertial body to the modulation; and calibrating the acceleration sensor in real time based on the measurement. Current can be driven through a plurality of magnets for generating the magnetic field so as to create the modulation. Sensing coils can be used for detecting the response of the inertial body. The modulation can be periodic, an impulse or some other aperiodic function.

FIG. 6

## Description

The present invention is related to acceleration sensors, and more particularly, to real-time calibration of acceleration sensors while the sensor is in use.

Magnetofluidic accelerometers are described in, e.g., U.S. patent application No. 10/836,624, filed May 3, 2004, U.S. patent application No. 10/836,186, filed May 3, 2004, U.S. patent application No. 10/422,170, filed May 21, 2003, U.S. patent application No. 10/209,197, filed August 1, 2002 (now U.S. Patent No. 6,731,268), U.S. patent application No. 09/511,831, filed February 24, 2000 (now U.S. Patent No. 6,466,200), and Russian patent application No. 99122838, filed November 3, 1999. These accelerometers utilize magnetofluidic principles and an inertial body suspended in a magnetic fluid, to measure acceleration. Such an accelerometer often includes a sensor casing (sensor housing, or "vessel"), which is filled with magnetic fluid. An inertial body ("inertial object") is suspended in the magnetic fluid. The accelerometer usually includes a number of drive coils (power coils) generating a magnetic field in the magnetic fluid, and a number of measuring coils to detect changes in the magnetic field due to relative motion of the inertial body.

When the power coils are energized and generate a magnetic field, the magnetic fluid attempts to position itself as close to the power coils as possible. This, in effect, results in suspending the inertial body in the approximate geometric center of the housing. When a force is applied to the accelerometer (or to whatever device the accelerometer is mounted on), so as to cause angular or linear acceleration, the inertial body attempts to remain in place. The inertial body therefore "presses" against the magnetic fluid, disturbing it and changing the distribution of the magnetic fields inside the magnetic fluid. This change in the magnetic field distribution is sensed by the measuring coils, and is then converted electronically to values of linear and angular acceleration. Knowing linear and angular acceleration, it is then possible, through straightforward mathematical operations, to calculate linear and angular velocity, and, if necessary, linear and angular position. Phrased another way, the accelerometer provides information about six degrees of freedom -- three linear degrees of freedom (x, y, z), and three angular (or rotational) degrees of freedom ($\alpha_x$, $\alpha_y$, $\alpha_z$).

Stability of sensor characteristics is an important factor in a system design. Sensor characteristics can change over time, either due to temporary environmental effects, or due to permanent changes in characteristics of various sensor components. For example, such environmental factors as temperature and humidity can affect sensor performance, by introducing an error into the output of the sensor. Such an error may disappear once the particular environmental parameter (temperature or humidity) reverts to some narrower operating range.

Other parameters may involve permanent changes to sensor properties. For example, the properties of the magnetic fluid can change over time. The properties of various mechanical components, such as the housing or the magnets, can also change. Dimensional tolerances can worsen, due to repeated shock and vibration. Some of the magnetic fluid might leak out, even if in minute quantities, creating an air bubble inside the volume that is supposed to be entirely filled with the magnetic fluid. All of these factors degrade sensor performance.

Conventional calibration approaches typically calibrate the sensor after manufacture, or after the sensor has been installed in a system, but do not provide for real-time calibration of the sensor. Accordingly, there is a need in the art for a sensor that can be calibrated repeatedly, including calibrated during operation.

The present invention relates in certain of its aspects to an accelerometer with real-time calibration that substantially obviates one or more of the disadvantages of the related art.

More particularly, in an exemplary embodiment of the present invention, a method of calibrating an acceleration sensor includes suspending an inertial body using a magnetic fluid; generating a magnetic field within the magnetic fluid; modulating the magnetic field to cause a displacement of the inertial body; measuring a response of the inertial body to the modulation; and calibrating the acceleration sensor based on the measurement. Current can be driven through a plurality of magnets for generating the magnetic field so as to create the modulation. Sensing coils, inductive coils, Hall sensors, or other means can be used for detecting the response of the inertial body. The modulation can be periodic, an impulse or some other aperiodic function. The modulation can also be ultrasonic.

In another aspect, a method for calibrating an accelerometer includes suspending an inertial body in a fluid; applying a predetermined force to the inertial body; measuring behavior of the inertial body in response to the applied force; and calibrating the accelerometer in real time as a function of the measured behavior.

In another aspect, a method of calibrating an accelerometer includes suspending an object using a fluid; generating a magnetic field within the fluid; delivering a stimulus to the inertial body to cause a displacement of the inertial body; measuring a response of the inertial body to the stimulus; and calibrating an accelerometer based on the measurement.

In another aspect, a method of calibrating an acceleration sensor includes suspending an inertial body using a fluid; generating a magnetic field within the fluid; continuously calculating the acceleration based on changes of the magnetic field; and calibrating the acceleration sensor in real time without interrupting normal functioning of the sensor. The calibrating step causes a predetermined displacement of the inertial body. An ultrasonic stimulus can causes the predetermined displacement. Alternatively, drive magnets can be driven to cause the predetermined displacement.

In another aspect, a sensor includes an inertial body, a plurality of magnets located generally around the inertial body, and a magnetic fluid between the magnets and the inertial body. A first circuit modulates magnetic fields generated by the magnets to calibrate the sensor in real time. A second circuit measures acceleration based on displacement of the inertial body. The acceleration can have components of linear and/or angular acceleration.

In another aspect, a sensor includes an inertial body, a plurality of magnets generating a repulsive force acting on the inertial body, and a controller that modulates magnetic fields generated by the magnets so as displace the inertial body. A controller calculates a response of the sensor to applied acceleration based on the displacement and calibrates the sensor in real time. The controller derives the acceleration as a function of a current required by the magnetic poles to modulate the magnetic fields. The inertial body is non-magnetic or weakly magnetic. The controller includes a bandpass filter centered at approximately a frequency of the modulation. A low pass filter can be used to filter out a frequency of the modulation when calculating acceleration.

In another aspect, a method of calibrating an acceleration sensor includes suspending an inertial body using a magnetic fluid; generating a magnetic field within the magnetic fluid; modulating the magnetic field to displace the inertial body in a predetermined manner; measuring a required modulation for causing the displacement; and calibrating the acceleration sensor based on the required modulation.

In another aspect, an acceleration sensor includes an inertial body; a fluid exerting a force on the inertial body; a plurality of magnets generating magnetic fields within the fluid; position sensors detecting a change in position of the inertial body due to acceleration; and a controller that drives the magnets so as to generate a predetermined movement of the inertial body. The acceleration sensor is calibrated in real time based on measurement of the predetermined movement by the position sensors.

In another aspect, a method of calibrating an accelerometer includes suspending an object using a fluid; generating a magnetic field within the fluid; causing a predetermined displacement of the inertial body; measuring a force necessary to cause the predermined displacement; and calibrating an accelerometer based on the measurement.

Additional features and advantages of the invention will be set forth in the description that follows, and in part will be apparent from the description, or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

The accompanying drawings, which are included to provide a further understanding of the invention and are incorporated in and constitute a part of this specification, illustrate embodiments of the invention and together with the description serve to explain the principles of the invention. In the drawings:

FIG. 1 illustrates an isometric three-dimensional view of an assembled magneto fluidic acceleration sensor of the present invention.
FIG. 2 illustrates a side view of the sensor with one of the drive magnet assemblies removed.
FIG. 3 illustrates a partial cutaway view showing the arrangements of the drive magnet coils and the sensing coils.
FIG. 4 illustrates an exploded side view of the sensor.
FIG. 5 illustrates a three-dimensional isometric view of the sensor of FIG. 4, but viewed from a different angle.
FIG. 6 illustrates one approach to real-time calibration of an accelerometer.
FIG. 7 illustrates the arrangement of electronics used for real-time calibration of the sensor.
Reference will now be made in detail to embodiments of the present invention, examples of which are illustrated in the accompanying drawings.

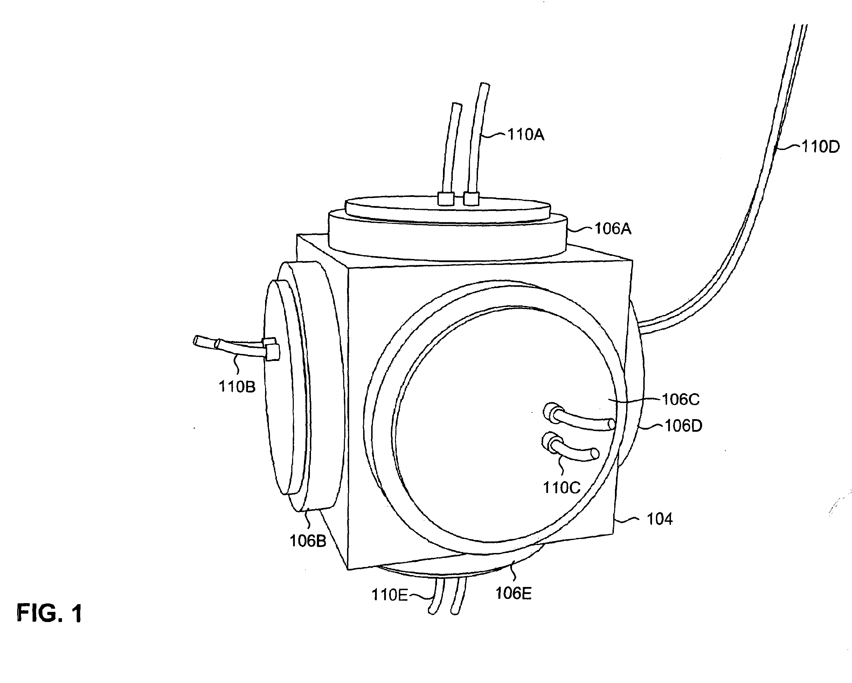

FIG. 1 illustrates an exemplary embodiment of a magnetofluidic acceleration sensor of the present invention. The general principles of operation of the magnetofluidic sensor are described in U.S. Patent No. 6,466,200, to which reference is directed. The sensor's behavior is generally described by a set of non-linear partial differential equations, see U.S. Provisional Patent Application No. 60/614,415, entitled METHOD OF CALCULATING LINEAR AND ANGULAR ACCELERATION IN A MAGNETOFLUIDIC ACCELEROMETER WITH AN INERTIAL BODY, Inventors: ROMANOV et al., Filed: September 30, 2004, and Appendix 1.

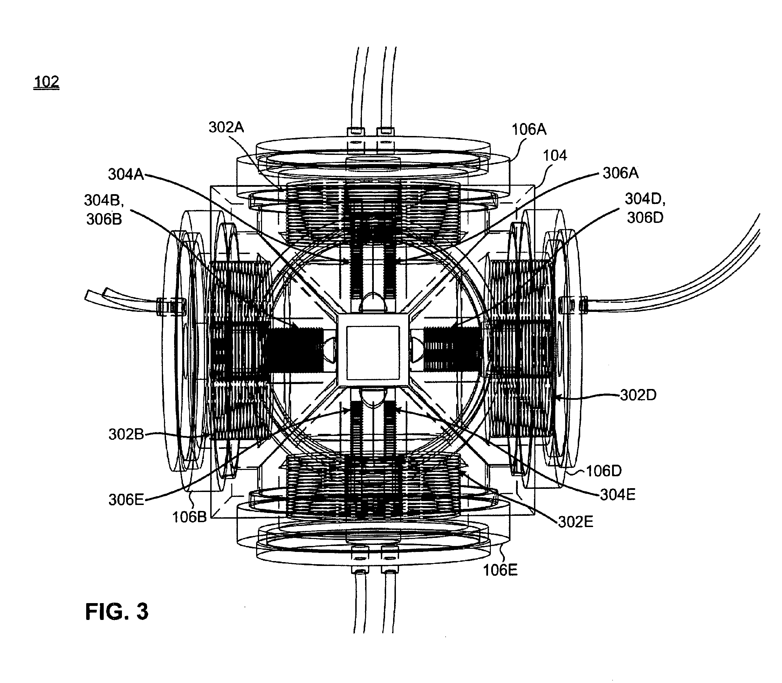

Further with reference to FIG. 1, the accelerometer 102, shown in FIG. 1 in assembled form, includes a housing 104, a number of drive magnet assemblies 106A-106E, each of which is connected to a power source using corresponding wires 110A-110E. Note that in this view, only five drive magnet assemblies 106 are shown, but see FIG. 3, where a sixth drive magnet assembly (designated 106F) is also illustrated.

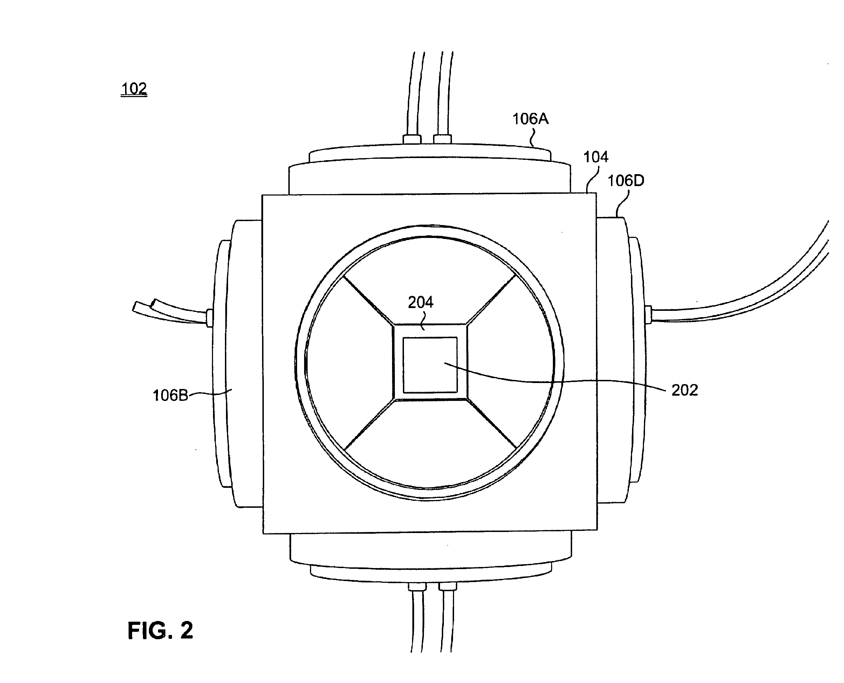

FIG. 2 illustrates the sensor 102 of FIG. 1, with one of the drive magnet assemblies removed. With the drive magnet assembly 106C removed, an inertial body 202 is visible in an approximate geometric center of the housing 104. The magnetic fluid 204 fills the remainder of the available volume within the housing. Note that the magnetic fluid itself is not actually drawn in the figure for clarity, although most such fluids are black in color and have an "oily" feel to them.

FIG. 3 illustrates a partial cutaway view showing the arrangements of the drive magnet coils and the sensing coils. Only some of the components are labeled in **FIG. 3** for clarity. Shown in **FIG. 3** are four drive coils (or drive magnets) **302A, 302B, 302E** and **302D,** collectively referred to as drive magnets **302** (the remaining two drive magnets are not shown in this figure). The drive magnets **302** are also sometimes referred to as suspension magnets, power magnets, or suspension coils (if electromagnets are used).

In one embodiment, each such drive magnet assembly **106** has two sensing coils, designated by **306** and **304** (in **FIG. 3, 306A, 304A, 306B, 304B, 306E, 304E, 306D, 304D).** The sensing coils **306, 304** are also sometimes referred to as "sensing magnets," or "measuring coils."

Note further that in order to measure both linear and angular acceleration, two sensing coils per side of the "cube" are desirable. If only a single sensing coil were to be positioned in a center of each side of the "cube," measuring angular acceleration would be impossible. As a less preferred alternative, it is possible to use only one sensing coil per side of the cube, but to displace it off center. However, the mathematical analysis becomes considerably more complex in this case.

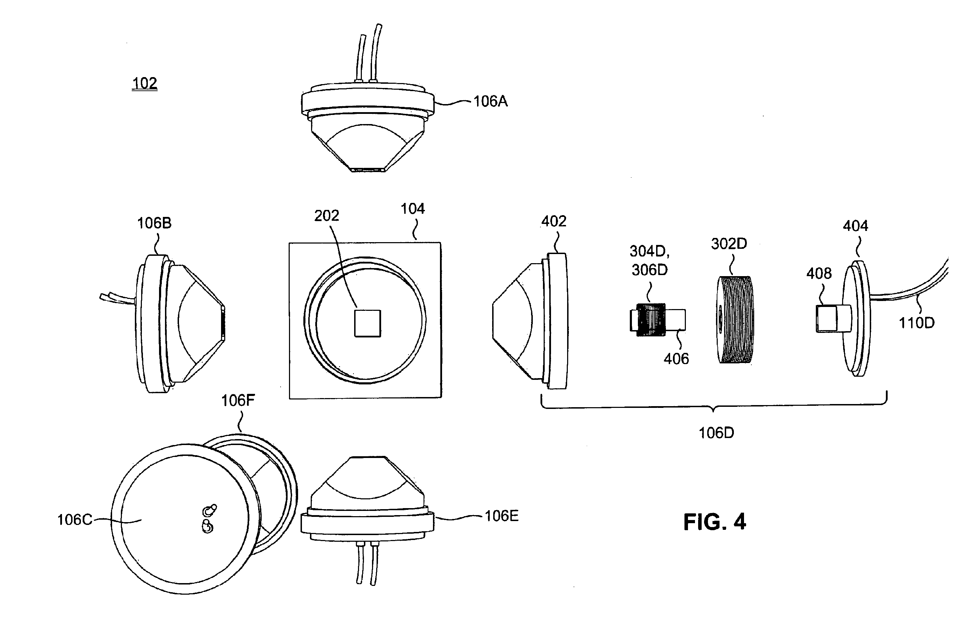

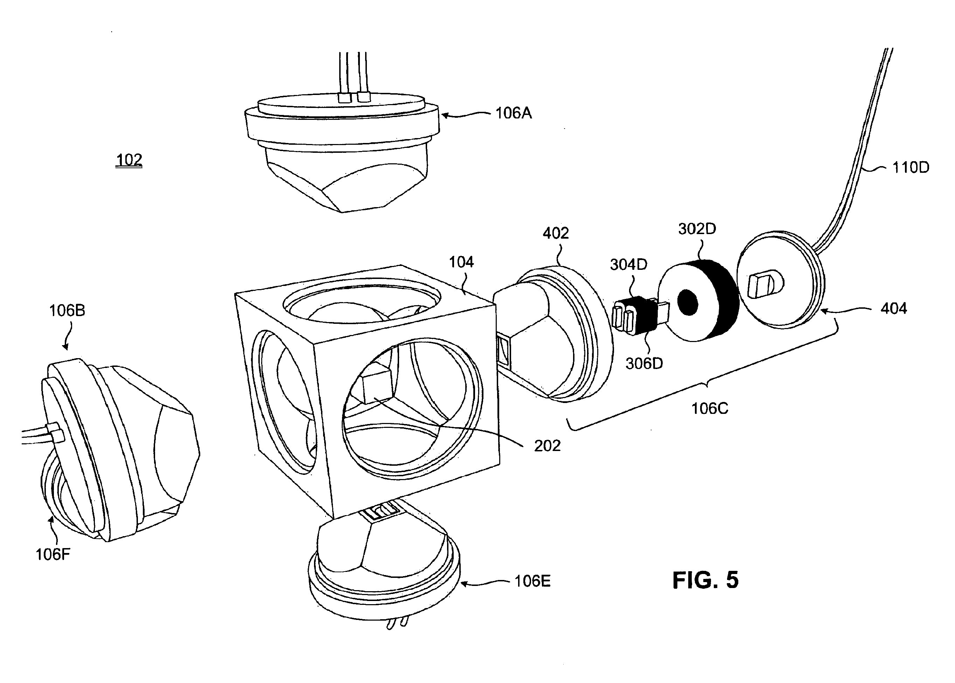

**FIGs. 4** and **5** illustrate exploded views of the sensor **102,** showing the same structure from two different angles. In particular, shown in **FIGs. 4** and **5** is an exploded view of one of the drive magnet assembly **106D.** As shown in the figures, the drive magnet assembly **106D** includes a casing **402,** a rear cap **404,** the drive coil **302D,** two sensing coils **306D** and **304D,** magnet cores **406** (one for each sensing coil **306D** and **304D),** and a drive magnet core **408.** In an alternative embodiment, the cores **406** and **408** can be manufactured as a single common piece (in essence, as a single "transformer core").

In this embodiment, the sensing coils **306D** and **304D** are located either inside the drive coil **302D,** and the rear cap **404** holds the drive coil **302D** and the sensing coils **306D** and **304D** in place in the drive coil assembly **106D,** or alternatively, the sensing coils **306D** and **304D** can be either partially or entirely forward of the drive coil **302D.**

The drive magnets **302** are used to keep the inertial body **202** suspended in place. The sensing coils **306, 304** measure the changes in the magnetic flux within the housing **104.** The magnetic fluid **204** attempts to flow to locations where the magnetic field is strongest. This results in a repulsive force against the inertial body **202,** which is usually either non-magnetic, or partly (weakly) magnetic (e.g., substantially less magnetic than the magnetic fluid **204).**

The sensor **102** described and illustrated above thus works on the principle of repulsive magnetic forces. The magnetic fluid **203** is highly magnetic, and is attracted to the drive magnets **302.** Therefore, by trying to be as close to the drive magnets **302** as possible, the magnetic fluid in effect "pushes out," or repels, the inertial body **202** away from the drive magnets **302.** In the case where all the drive magnets **302** are identical, or where all the drive magnets **302** exert an identical force, and the drive magnets **302** are arranged symmetrically about the inertial body **202,** the inertial body **202** will tend to be in the geometric center of the housing **104.** This effect may be thought of as a repulsive magnetic effect (even though, in reality, the inertial body **202** is not affected by the drive magnets **302** directly, but indirectly, through the magnetic fluid **204).**

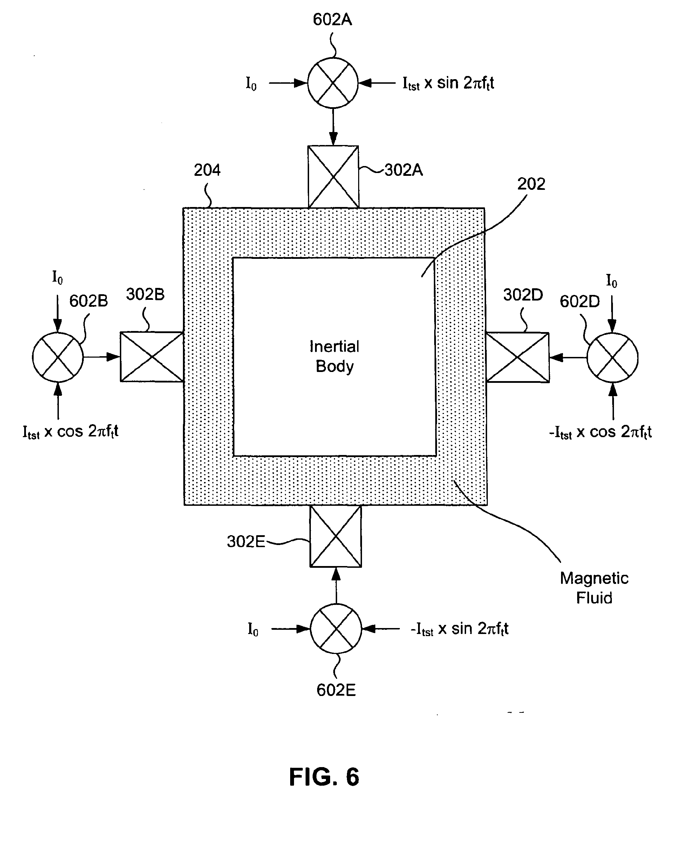

**FIG. 6** illustrates one approach to real time calibration of the sensor **102.** Shown in **FIG. 6** is the inertial body **202** and magnetic fluid **204.** The housing **104** is not shown in this figure for clarity. Also shown in **FIG. 6** are four drive magnets **302A, 302B, 302D** and **302E.** Only four of the six drive magnets are shown in this figure for clarity. In this case, the drive magnets **302** are shown as electromagnets only, although the invention is not limited to this embodiment, and the drive magnets **302** can also be a combination of an electromagnet and a permanent magnet. Each drive magnet **302** is driven by a DC current, designated by $I_0$. If the sensor **102** is symmetric, then the current $I_0$ through each drive magnet **302** will be the same. If the sensor **102** is asymmetric (for example, a brick-like housing **104** shape, or some other arbitrary non-symmetrical shape), then the nominal DC current $I_0$ may be different for the various drive magnets **302.**

Also shown in **FIG. 6** are summers **602A, 602B, 602D** and **602E,** for the corresponding drive magnets **302A, 302B, 302D, 302E,** respectively. The summers **602** sum the DC current $I_0$ and the testing, or stimulus, current $I_{tst}$ modulated by a periodic function (e.g., either a sine or a cosine with a frequency $f_t$). Thus, each drive magnet **302** is driven both by a DC current $I_0$ and the testing current $I_{tst} \times \sin(2\pi f_t t)$ with the phases of the test currents as shown in **FIG. 6.**

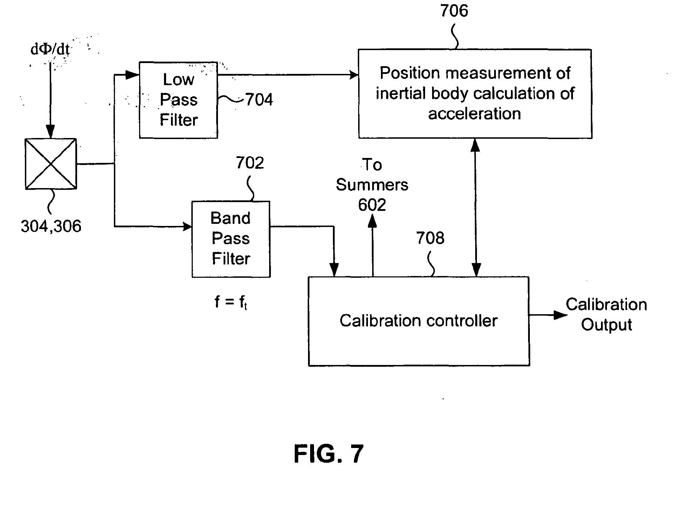

**FIG. 7** illustrates the arrangement of electronics used for real time calibration of the sensor **102.** As shown in **FIG. 7,** the changes $\dfrac{d\Phi}{dt}$ in the magnetic flux density $\Phi$ within the sensor **102** are detected by the sensing coils **304,**

**306.** The outputs of the sensing coils **302, 306** are fed through a lowpass filter **704** or through a band pass filter **702.** The low pass filter **704,** which is optional, can be used to filter out any unwanted frequency components, such as high frequency vibration. It can also be used to filter out the effects of the calibration (i.e., to filter out the response of the sensor **102** at $f_t$). The band pass filter **702** is centered around the test frequency $f_t$. It is generally preferable, although not necessary, to select a testing frequency $f_t$ that is higher than any expected vibration that the sensor **102** needs to detect, given the particular application. For example, $f_t$ may be higher than the low pass filter **704** will permit through it.

Position measurement electronics **706** calculates the position of the inertial body **202,** based on the output of the sensing coils (or other position sensors), and from the position of the inertial body **202,** derives linear and angular acceleration. A calibration controller **708** receives the output of the band pass filter **702,** which represents the movement of the inertial body **202** due to the applied calibration stimulus $I_{tst}$. The calibration controller **708** also outputs control signals to the summers **602,** so as to drive the drive magnets **302** in the predictable manner.

By knowing the expected effect of the stimulus $I_{tst}$ x sin ($2\pi f_t t$) on the inertial body **202,** and comparing the predicted response of the inertial body **202** with an actual response, the sensor **102** can be calibrated in real time, without taking the sensor **102** (or the device that uses the sensor **102**) offline. Note that with the test frequency $f_t$ higher than any expected intput frequency, there is no reason why the applied stimulus $I_{tst}$ will affect measurement of acceleration by the sensor **102.** Note also that the preferred amplitude of the stimulus is on the order of 5-10% of the dynamic range of the sensor **102.**

Although in the description above, drive magnets **302** are used to deliver a known stimulus to the sensor **102,** this need not be the case. For example, an ultrasonic stimulus can also be used. A source of ultrasonic vibration can be mounted on the housing **104** (not shown in the figures) (or even inside the housing **104),** and controlled to deliver a known stimulus to the inertial body **202.** With the response measured and compared to the expected (or previously measured) response, the sensor **102** can be calibrated, in a manner similar to discussed above.

Although a periodic sine-wave type stimulus is discussed above, other signal shapes can be used, such as step functions, impulse functions, aperiodic functions, square waves, and others.

The output of the calibration controller **704** can then be used by the rest of the sensor electronics, to apply a correction factor to the output of the sensor **102.** Alternatively, or in addition, the DC currents $I_0$ can be changed or adjusted in response to the calibration. As an alternative, the calibration controller **708** can force the inertial body **202** to be displaced by a given amount, and measure the "effort" (i.e., the required current) needed to do so (and compare that "effort" to the expected effort), thereby deriving the calibration factor.

Having thus described embodiments of the invention, it should be apparent to those skilled in the art that certain advantages of the described method and apparatus have been achieved. It should also be appreciated that various modifications, adaptations, and alternative embodiments thereof may be made within the scope of the present invention. The invention is further defined by the following claims.

The abstract of this application is repeated below as part of this specification.

A method of calibrating an acceleration sensor includes suspending an inertial body using a magnetic fluid; generating a magnetic field within the magnetic fluid; modulating the magnetic field to cause a displacement of the inertial body; measuring a response of the inertial body to the modulation; and calibrating the acceleration sensor in real time based on the measurement. Current can be driven through a plurality of magnets for generating the magnetic field so as to create the modulation. Sensing coils can be used for detecting the response of the inertial body. The modulation can be periodic, an impulse or some other aperiodic function.

Reference is directed to the following applications filed by the present applicant on the same day as the present application:

| TITLE | APPLICATION | REFERENCE |
|---|---|---|
| Magnetofluidic accelerometer | | P27929EP-PDG |
| Magnetofluidic accelerometer | | P27930EP-PDG |
| Magnetofluidic accelerometer with housing | | P27932EP-PDG |

**Claims**

1. A method of calibrating an acceleration sensor comprising:

    suspending an inertial body using a magnetic fluid;
    generating a magnetic field within the magnetic fluid;
    modulating the magnetic field to cause a displacement of the inertial body;
    measuring a response of the inertial body to the modulation; and
    calibrating the acceleration sensor based on the measurement.

2. The method of claim 1, further comprising driving current through a plurality of magnets for generating the magnetic field.

3. The method of claim 1, further comprising using sensing coils for detecting the response of the inertial body.

**4.** The method of claim 1, wherein the modulation comprises periodic modulation.

**5.** The method of claim 1, wherein the modulation comprises an impulse.

**6.** A method for calibrating an accelerometer comprising:

suspending an inertial body in a fluid;
applying a predetermined force to the inertial body;
measuring behavior of the inertial body in response to the predetermined force; and
calibrating the accelerometer in real time as a function of the measured behavior.

**7.** A method of calibrating an accelerometer comprising:

suspending an object using a fluid;
generating a magnetic field within the fluid;
delivering a stimulus to the object to cause a displacement of the object;
measuring a response of the object to the stimulus; and
calibrating an accelerometer based on the measurement.

**8.** The method of claim 7, wherein the stimulus is an ultrasonic stimulus.

**9.** The method of claim 7, wherein the step of delivering a stimulus comprises modulating a plurality of drive magnets.

**10.** A method of calibrating an acceleration sensor comprising:

suspending an inertial body using a fluid;
generating a magnetic field within the fluid;
continuously calculating the acceleration based on changes of the magnetic field; and
calibrating the acceleration sensor in real time without interrupting normal functioning of the sensor.

**11.** The method of claim 10, wherein the calibrating step provides a predetermined change to the magnetic field.

**12.** The method of claim 10, wherein the calibrating step causes a predetermined displacement of the inertial body.

**13.** A sensor comprising:

an inertial body;
a plurality of magnets located generally around the inertial body;
a fluid between the magnets and the inertial body;
a first circuit that modulates magnetic fields generated by the magnets to calibrate the sensor in real time; and
a second circuit that measures acceleration based on displacement of the inertial body.

**14.** The sensor of claim 13, wherein the second circuit measures the acceleration based on an output of a plurality of sensing coils.

**15.** The sensor of claim 13, wherein the acceleration includes angular acceleration.

**16.** The sensor of claim 13, wherein the magnets further comprise permanent magnets.

**17.** The sensor of claim 13, wherein the fluid is a magnetic fluid.

**18.** A sensor comprising:

an inertial body;
a plurality of magnets generating a repulsive force acting on the inertial body;
a controller that modulates magnetic fields generated by the magnets so as to displace the inertial body; and
a circuit that calculates a response of the inertial body to applied acceleration based on the displacement.

**19.** The sensor of claim 18, wherein the controller derives the acceleration as a function of a current required by the magnets to modulate the magnetic fields.

**20.** The sensor of claim 18, wherein the circuit comprises a bandpass filter centered at approximately a frequency of the modulation.

**21.** The sensor of claim 18, further comprising a low pass filter to filter out a frequency of the modulation when calculating acceleration due to external forces.

**22.** The sensor of claim 21, wherein the circuit applies a correction factor to the calculated acceleration based on an output of the controller.

FIG. 1

EP 1 640 728 A1

FIG. 2

FIG. 3

102

106A

106B

202    104    402

304D,
306D    302D    404

408

406

106D    110D

106F

106C    106E    FIG. 4

EP 1 640 728 A1

FIG. 5

602A

$I_0 \longrightarrow \bigotimes \longleftarrow I_{tst} \times \sin 2\pi f_t t$

302A

204

202

302D  602D

$I_0$

$\bigotimes$

302B

$I_0$

602B

Inertial
Body

302D

$\bigotimes \longleftarrow -I_{tst} \times \cos 2\pi f_t t$

$I_{tst} \times \cos 2\pi f_t t$

302E

Magnetic
Fluid

$I_0 \longrightarrow \bigotimes \longleftarrow -I_{tst} \times \sin 2\pi f_t t$

602E

# FIG. 6

dΦ/dt

706

304,306

Low Pass Filter ~704

Position measurement of inertial body calculation of acceleration

702

Band Pass Filter

f = f$_t$

To Summers 602

708

Calibration controller

Calibration Output

## FIG. 7

**European Patent Office**

## EUROPEAN SEARCH REPORT

Application Number

EP 05 25 5835

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 017, no. 197 (P-1523), 16 April 1993 (1993-04-16) -& JP 04 344467 A (TOYOTA MOTOR CORP), 1 December 1992 (1992-12-01) * abstract * * the whole document * | 1,2,5-7, 9-13, 17-19 | G01P21/00 G01P15/18 G01P15/11 G01P15/105 G06F3/033 |
| X | US 4 869 092 A (BERNARD ET AL) 26 September 1989 (1989-09-26) * column 5, line 23 - column 7, line 30; figures 6-9 * | 1,6,10, 13 | |
| A | US 4 473 768 A (KERR ET AL) 25 September 1984 (1984-09-25) * column 5, line 46 - line 56 * | 1,6,10, 13 | |
| | | | TECHNICAL FIELDS SEARCHED (IPC) G01P G06F G01V |

The present search report has been drawn up for all claims

| Place of search | Date of completion of the search | Examiner |
|---|---|---|
| The Hague | 2 February 2006 | Pflugfelder, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 5835

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2006

| Patent document cited in search report | | Publication date | Patent family member(s) | | Publication date |
|---|---|---|---|---|---|
| JP 04344467 | A | 01-12-1992 | NONE | | |
| US 4869092 | A | 26-09-1989 | DE | 3766483 D1 | 10-01-1991 |
| | | | EP | 0274943 A1 | 20-07-1988 |
| | | | FR | 2608771 A1 | 24-06-1988 |
| US 4473768 | A | 25-09-1984 | NONE | | |

EPO FORM P0459

For more details about this annex : see Official Journal of the European Patent Office, No. 12/82